# EUROPEAN PATENT SPECIFICATION

(11) **EP 3 694 304 B1**
(45) Date of publication and mention of the grant of the patent: **28.08.2024**
(21) Application number: 18866611.9
(22) Date of filing: 04.10.2018
(51) Int. Cl.: A01D 34/90

(54) **AN ELECTRICALLY POWERED VEGETATION CUTTER**
ELEKTRISCH ANGETRIEBENER VEGETATIONSSCHNEIDER
DISPOSITIF DE COUPE DE VÉGÉTATION À ALIMENTATION ÉLECTRIQUE

(30) Priority: 12.10.2017 SE 1751263
(43) Date of publication of application: 19.08.2020
(73) Proprietor: Husqvarna AB, 561 82 Huskvarna (SE)
(72) Inventor: ALEXANDERSSON, Daniel, 561 43 Huskvarna (SE); ATTERGRIM, Emelie, 561 42 Huskvarna (SE); KULLBERG, Stefan, 554 47 Jönköping (SE); ARVIDSSON, Mikael, 561 39 Huskvarna (SE)
(86) International application number: PCT/SE2018/051012
(87) International publication number: WO 2019/074424

(56) References cited:
- EP-A1- 1 962 574
- EP-A1- 2 845 460
- WO-A1-2016/154969
- WO-A1-2017/168037
- CN-U- 202 104 041
- DE-U1- 202012 012 158
- DE-U1- 202012 012 158
- JP-A- H03 119 916
- JP-A- H03 119 916
- US-A1- 2008 190 631
- US-A1- 2011 131 817
- US-A1- 2013 276 314

## Description

### Field of the invention

The present disclosure relates to an electrically powered vegetation cutter, comprising a shaft tube, a cutting implement at a bottom end of the shaft tube, a top housing at a top end of the shaft tube, and a handle arrangement. The handle arrangement is connected to the shaft tube at a location in between the cutting implement and the top housing, and the vegetation cutter comprises an electric motor configured to drive the cutting implement and a battery configured to supply power to the electric motor.

### Technical background

Such a vegetation cutter is disclosed for instance in WO-2011/005156-A1.

An attempt to reduce the vibrations in an electric vegetation cutter is disclosed in JPH03119916 A, which comprises a rather bulky anti-vibration device attached to the shaft tube.

Further vegetation cutters are e.g. known from DE 20 2012 012158 U1 and US 2011/131817 A1.

One problem associated with such cutters is how to make them more suitable for professional use.

### Summary of the invention

One object of the present disclosure is therefore to provide a vegetation cutter which is more suitable for use professionally. This object is achieved with a vegetation cutter as defined in claim 1. More specifically, in a vegetation cutter of the initially mentioned kind, the top housing comprises at least the electric motor. The handle arrangement comprises a connector link, which at a first end is connected at the top housing via a pivotal connection and at second end is connected to the shaft tube, at a distance from the top housing and via a resilient element. The vegetation cutter further comprises a handle bar comprising a first and a second handle, which are attached to the connector link. The mass of the top housing is constant during use and the connector link length and the dynamic properties of the resilient element are adapted to carry out vibration dampening in a desired way with respect to predicted vibration frequencies produced by a working cutting implement.

In such a vegetation cutter, vibrations originating from the cutting implement must propagate through the shaft tube, via the upper housing and the connector link to reach the handles. With the well-defined mass determined by the electric motor (and preferably the battery) and the elastic suspension of the handles in relation to the upper housing, there is provided a very effective dampening effect on the vibrations, particularly for higher frequencies that do not easily influence the motor/battery mass. This reduces vibrations experienced when holding the vegetation cutter in the handles and makes the vegetation cutter more suitable for long-term professional use.

The connector link may be configured to surround the shaft tube which provides for a both strong and compact structure.

Both the electric motor and the battery may be located in the top housing, which provides for a both considerable and well-defined mass providing substantial dampening of vibrations.

The connector link may be connected by means of a resilient element in the form of at least one spring to a shaft collar which is firmly attached to the shaft tube. This provides a reliable connection point at the shaft tube.

The connector link may be connected to the top housing by means of a pivotal connection in the form of one or more bushings.

The rotating mass of the vegetation cutter may be higher below the point of the shaft tube where the resilient element is connected than above the same.

### Brief description of the drawings

Fig 1 shows a vegetation cutter according to the present disclosure.
Fig 2 illustrates schematically the operation of a vibration reducing arrangement according to the present disclosure.
Fig 3 shows an exploded view of the handle arrangement of the vegetation cutter in fig 1.

### Detailed description

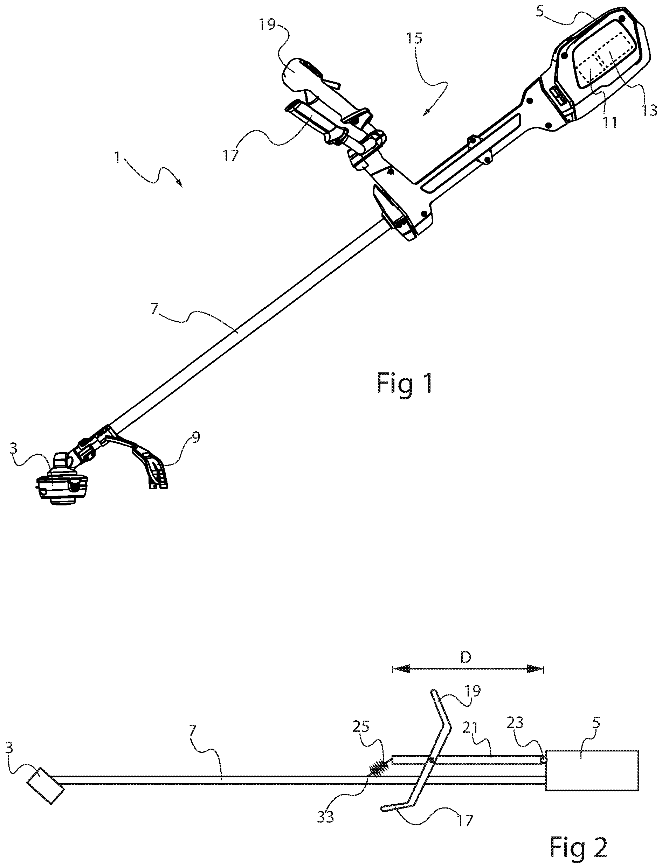

One example of a vegetation cutter 1 according to the present disclosure is shown in fig 1. The vegetation cutter 1 comprises a cutting implement 3 attached to a bottom end of a shaft tube 7. In the illustrated case, the cutting implement 3 is a cutting wire intended to cut for instance grass. It is however possible to replace the cutting wire with a clearing saw blade or similar, and the vegetation cutter may be devised as a trimmer, a brush cutter or a clearing saw depending on the cutting implement used as well as the desired use of the vegetation cutter. A screen 9 may be provided at the cutting implement 3 to protect a user from debris.

A top housing 5 is located at a top end of the shaft tube 7 and may comprise either or both of an electric motor 11 and a battery 13 supplying electric power to the electric motor 11. A handle arrangement 15 is provided comprising first and second handles 17, 19, either of which may as shown be provided with control devices, such as a throttle controlling the motor, and the like.

In the present disclosure, the handle arrangement 15 is devised to reduce vibrations induced in the device by the cutting implement's 3 operation. While there exist anti-vibration solutions for non-electric vegetation cutters, such solutions have been adapted to minimize the transfer of vibrations from a combustion engine to the handles held by the user. Electric motors on the other hand produce comparatively negligible vibrations. In the present disclosure, the motor and/or battery 11, 13 in the top housing 5 is instead used as a dampening mass that serves to reduce vibrations travelling from the cutting implement at the bottom end of the shaft tube 7 to the handles 17, 19 held by the user.

Although the most significant top housing mass is provided when both the battery 13 and the motor 11 are located in the top housing 5, also including only one of those items in the top housing would provide a dampening effect. This may be the case if for instance a large backpack battery is used and only the motor is located in the top housing, or if the motor is located at the cutting implement and only the battery is placed in the top housing.

A vibration reducing arrangement is schematically illustrated in fig 2. The handle arrangement 15 comprises a connector link 21, which at one end is connected to or at the top housing 5 via a pivotal connection 23 and at or close to another end is connected to the shaft tube 7, at a distance D from the top housing 5, via a resilient element 25. The connector link 21 may be made in one piece, for instance in a magnesium alloy, which may be cast and is both light and strong.

Typically, as will be shown in greater detail, the pivotal connection 23 may be a rubber bushing connected to the top housing 5 or to the shaft tub 7 next to the top housing. The resilient element 25 may be a spring connected to a shaft collar attached to the shaft tube 7. The distance D may typically be in the range between 35 and 50 cm although not limited to this range. The handle bar comprising the first and second handles 17, 19 may be attached to the connector link 21. With this arrangement, the mass located in the top housing will function as a vibration isolator, dampening vibrations that propagate from the cutting implement 3 towards the handles 17, 19. Thanks to the use of an electric motor 11 and/or a battery 13 in the housing, this mass will be more or less constant during use, which means that the connector link 21 length and the dynamic properties of the resilient element 25 may be adapted to carry out vibration dampening in a desired way with respect to predicted vibration frequencies produced by the working cutting implement. This is in contrast to for instance a combustion engine where the weight of a petrol tank will fall during use as petrol is consumed. Further a liquid fuel will function in an unpredictable way as it can move in the tank.

With the presently disclosed arrangement it is even possible to devise the mass of the top housing as a frequency adapted spring mass system that cancels specific frequency vibrations by resonating out of phase therewith as is known per se.

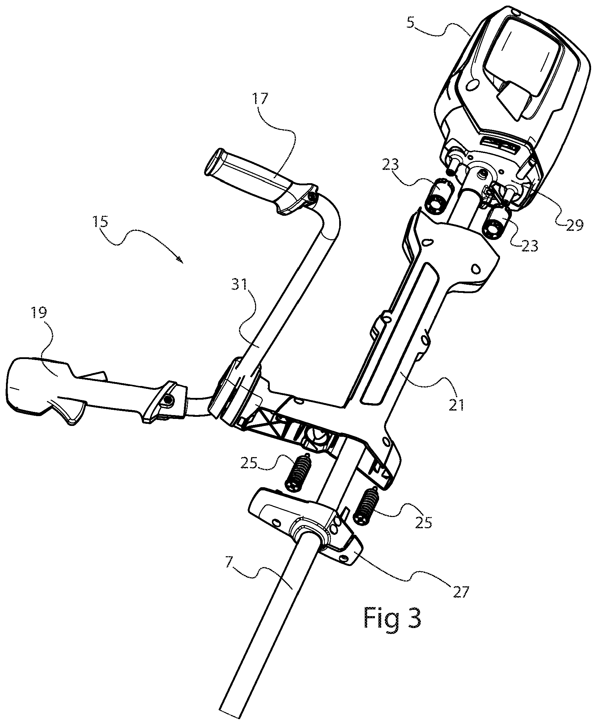

Fig 3 shows an exploded view of the handle arrangement 15 of the vegetation cutter in fig 1. As shown, the connector link 21 may be a hollow element through which the shaft tube 7 runs, although other configurations are possible such as locating the connector link on the upper side of the shaft tube 7. The shown configuration however, is compact, provides a significant second area of moment, i.e. is strong, and still allows the connector link 21 to move in relation to the shaft tube 7 and vice versa. There is thus provided a play between the shaft tube 7 and the connector link 21.

In the illustrated case, the connector link 21 at one end is attached to the top housing 5 by means of two bushings providing the above-mentioned pivotal connection 23. It would of course be possible to use a different number of bushings. It would also be possible to attach the connector link to the shaft tube 7 or an intermediate member connected to the shaft tube 7 at a location close to the top housing 5. Typically, the pivotal connections 23 are attached to a motor bracket 29, which is also used as a base for the electric motor. The motor bracket 29 in turn may be firmly attached to the shaft tube 7.

At the other end, the connector link is attached, via two springs forming the above-mentioned resilient member 25, to a shaft collar 27 which in turn is firmly attached to the shaft tube 7. Needless to say, one or more than two springs may be used to this end, and other forms of resilient members would be possible.

The handles 17, 19 are attached to the connector link 21 by means of an intermediate bar 31 which is firmly connected to the connector link 21 at the lower end thereof. Other handle configurations may be possible as well.

With this general configuration, vibrations originating from the cutting implement can to a great extent be prevented from propagating to the handles 17, 19 which improves the working conditions for the user who is subjected to less vibrations. This particularly advantageous in professionally used vegetation cutters that are used long hours for instance maintaining parks or recreational areas.

If a dominant vibration frequency can be predicted, the mass-spring system can be tuned to dampening this frequency in particular. For instance, a three-teeth brush cutter rotating at 700 rpm will produce a dominant 2100 Hz vibration, and the spring-mass system can be tuned to dampening this frequency in particular, as is well known per se. The rotating mass of the vegetation cutter may be higher below the point 33 (cf. fig 2), where the resilient element 25 is connected to the shaft tube 7, than above this point and still provide a useful dampening of vibrations.

The terms 'top' and 'bottom' as well as 'upper' and 'lower' as used herein refer to the normal use of the vegetation cutter where cutting implement 3 at the bottom end of the shaft tube 7 is close to the ground and the top housing 5 is not.

The present disclosure is not limited to the above described examples, and may be varied and altered in different ways within the scope of the appended claims.

## Claims

1. An electrically powered vegetation cutter (1), comprising a shaft tube (7), a cutting implement (3) at a bottom end of the shaft tube, a top housing (5) at a top end of the shaft tube and a handle arrangement (15), connected to the shaft tube (7) at a location in between the cutting implement (3) and the top housing (5), the vegetation cutter comprising an electric motor (11) configured to drive the cutting implement (3) and a battery (13) configured to supply power to the electric motor, and
the top housing (5) comprising the electric motor (11) and having a constant mass during use;
the handle arrangement (15) comprising a connector link (21), which at a first end is connected at the top housing (5) via a pivotal connection (23) and at second end is connected to the shaft tube (7), at a distance (D) from the top housing (5), via a resilient element (25);
a handle bar comprising a first and a second handle (17, 19) and being attached to the connector link (21), the vegetation cutter being **characterized by**:
the length of the connector link (21) and the dynamic properties of the resilient element (25) are adapted to carry out vibration dampening of predicted vibration frequencies produced by the cutting implement (3) during use.

2. A vegetation cutter according to claim 1, wherein the connector link (21) is configured to surround the shaft tube (7).

3. A vegetation cutter according to claim 1 or 2, wherein the battery is located in the top housing (5).

4. A vegetation cutter according to any of the preceding claims, wherein said second end of the connector link (21) is connected by means of a resilient element (25) in the form of at least one spring to a shaft collar (27) which is firmly attached to the shaft tube (7).

5. A vegetation cutter according to claim 1, wherein the connector link (21) is connected to the top housing (5) by means of a pivotal connection (23) in the form of one or more bushings.

6. A vegetation cutter according to any of the preceding claims, wherein the rotating mass of the vegetation cutter is higher below the point (33) of the shaft tube (7) where the resilient element (25) is connected than above the same.

## Patentansprüche

1. Elektrisch angetriebener Vegetationsschneider (1), umfassend ein Schaftrohr (7), ein Schneidwerkzeug (3) an einem unteren Ende des Schaftrohrs, ein oberes Gehäuse (5) an einem oberen Ende des Schaftrohrs und eine Griffanordnung (15), die mit dem Schaftrohr (7) an einer Stelle zwischen dem Schneidwerkzeug (3) und dem oberen Gehäuse (5) verbunden ist, wobei der Vegetationsschneider einen Elektromotor (11), der so konfiguriert ist, dass er das Schneidwerkzeug (3) antreibt, und eine Batterie (13) umfasst, die so konfiguriert ist, dass sie den Elektromotor mit Strom versorgt, und
das obere Gehäuse (5) den Elektromotor (11) umfasst und während des Gebrauchs eine konstante Masse aufweist,
die Griffanordnung (15) ein Verbindungsglied (21) umfasst, das an einem ersten Ende über eine Schwenkverbindung (23) mit dem oberen Gehäuse (5) und an einem zweiten Ende über ein elastisches Element (25) mit dem Schaftrohr (7) in einem Abstand (D) zum oberen Gehäuse (5) verbunden ist;
eine Griffstange, die einen ersten und einen zweiten Griff (17, 19) umfasst und an dem Verbindungsglied (21) angebracht ist, wobei der Vegetationsschneider durch Folgendes gekennzeichnet ist:
die Länge des Verbindungsglieds (21) und die dynamischen Eigenschaften des elastischen Elements (25) so ausgelegt sind, dass sie eine Schwingungsdämpfung vorhergesagter Schwingungsfrequenzen bewirken, die von dem Schneidwerkzeug (3) während des Gebrauchs erzeugt werden.

2. Vegetationsschneider nach Anspruch 1, wobei das Verbindungsglied (21) so konfiguriert ist, dass es das Schaftrohr (7) umgibt.

3. Vegetationsschneider nach Anspruch 1 oder 2, wobei sich die Batterie im oberen Gehäuse (5) befindet.

4. Vegetationsschneider nach einem der vorhergehenden Ansprüche, **dadurch gekennzeichnet, dass** das zweite Ende des Verbindungsgliedes (21) über ein elastisches Element (25) in Form mindestens einer Feder mit einem Schaftkragen (27) verbunden ist, der fest am Schaftrohr (7) angebracht ist.

5. Vegetationsschneider nach Anspruch 1, wobei das Verbindungsglied (21) mit dem oberen Gehäuse (5) mittels einer Schwenkverbindung (23) in Form einer oder mehrerer Buchsen verbunden ist.

6. Vegetationsschneider nach einem der vorhergehenden Ansprüche, wobei die rotierende Masse des Vegetationsschneiders unterhalb des Punktes (33) des Schaftrohrs (7), an dem das elastische Element (25) verbunden ist, höher ist als oberhalb desselben.

## Revendications

1. Dispositif de coupe de végétation à alimentation électrique (1), comprenant un tube d'arbre (7), un outil de coupe (3) à une extrémité inférieure du tube d'arbre, un logement supérieur (5) à une extrémité supérieure du tube d'arbre et un agencement de poignée (15), relié au tube d'arbre (7) en une position entre l'outil de coupe (3) et le logement supérieur (5), le dispositif de coupe de végétation comprenant un moteur électrique (11) conçu pour entraîner l'outil de coupe (3) et une batterie (13) conçue pour alimenter le moteur électrique, et
le logement supérieur (5) comprenant le moteur électrique (11) et ayant une masse constante en utilisation ;
l'agencement de poignée (15) comprenant une pièce de liaison (21), qui à une première extrémité est reliée au logement supérieur (5) par le biais d'une liaison pivotante (23) et à une seconde extrémité est reliée au tube d'arbre (7), à une distance (D) du logement supérieur (5), par le biais d'un élément élastique (25) ;
un guidon comprenant une première et une seconde poignée (17, 19) et étant fixée à la pièce de liaison (21), le dispositif de coupe de végétation étant **caractérisé en ce que** :
la longueur de la pièce de liaison (21) et les propriétés dynamiques de l'élément élastique (25) sont conçues pour exécuter un amortissement de vibrations de fréquences de vibration prédites produites par l'outil de coupe (3) en utilisation.

2. Dispositif de coupe de végétation selon la revendication 1, dans lequel la pièce de liaison (21) est conçue pour entourer le tube d'arbre (7).

3. Dispositif de coupe de végétation selon la revendication 1 ou 2, dans lequel la batterie est située dans le logement supérieur (5).

4. Dispositif de coupe de végétation selon l'une quelconque des revendications précédentes, dans lequel ladite seconde extrémité de la pièce de liaison (21) est reliée au moyen d'un élément élastique (25) sous la forme d'au moins un ressort à une bague d'épaulement (27) qui est fermement fixée au tube d'arbre (7).

5. Dispositif de coupe de végétation selon la revendication 1, dans lequel la pièce de liaison (21) est reliée au logement supérieur (5) au moyen d'une liaison pivotante (23) sous la forme d'une ou plusieurs douilles.

6. Dispositif de coupe de végétation selon l'une quelconque des revendications précédentes, dans lequel la masse rotative du dispositif de coupe de végétation est plus élevée sous le point (33) du tube d'arbre (7) où l'élément élastique (25) est relié qu'au-dessus de celui-ci.
